(19) **Europäisches Patentamt**
**European Patent Office**
**Office européen des brevets**

(11) **EP 4 580 167 A1**

(12) **EUROPEAN PATENT APPLICATION**
published in accordance with Art. 153(4) EPC

(43) Date of publication:
**02.07.2025 Bulletin 2025/27**

(21) Application number: **23860748.5**

(22) Date of filing: **18.08.2023**

(51) International Patent Classification (IPC):
**H04L 69/329** (2022.01)   **H04L 69/326** (2022.01)
**H04L 69/22** (2022.01)

(52) Cooperative Patent Classification (CPC):
**H04L 69/22; H04L 69/326; H04L 69/329**

(86) International application number:
**PCT/KR2023/012258**

(87) International publication number:
**WO 2024/049070 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 KR 20220110189**

(71) Applicants:
• **Samsung Electronics Co., Ltd.
Suwon-si, Gyeonggi-do 16677 (KR)**
• **Seoul National University R&DB Foundation
Seoul 08826 (KR)**

(72) Inventors:
• **PARK, Jungshin
Suwon-si Gyeonggi-do 16677 (KR)**
• **LEE, Kyunghan
Seoul 08826 (KR)**
• **JEONG, Sangsoo
Suwon-si Gyeonggi-do 16677 (KR)**
• **CHO, Seongsik
Seoul 08826 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR TRANSFERRING APPLICATION LAYER INFORMATION/ TRANSPORT LAYER INFORMATION FOR APPLICATION PERFORMANCE IN CELLULAR COMMUNICATION SYSTEM**

(57) The present disclosure relates to a 5G or 6G communication system for supporting higher data transmission rates. The present disclosure provides a method of a core network entity for, in a communication system supporting an operation of a network slice-based application, receiving information related to the application, the method comprising the operations of: receiving a transmission control protocol (TCP) protocol data unit (PDU) from an external device through a transport layer; parsing a TCP header in the TCP PDU to acquire application layer information related to the application from the TCP header; and transmitting control information related to the application to the external device on the basis of the application layer information, wherein the application layer information includes an application data unit (ADU) identifier corresponding to the application and a required latency time corresponding to the application.

FIG. 1

$$t_{e2e}=t_{pre\text{-}processing}+t_{up}+t_{computing}+t_{down}+t_{post\text{-}processing}\le t_{budget}$$

EP 4 580 167 A1

**Description**

[Technical Field]

The disclosure relates to a method and device for utilizing and transferring application layer information or transport layer information to enhance application performance in a cellular wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the development of 5G communication systems, network slice (or network slicing) technology has been introduced for radio access network (RAN) and core network (CN) structures.

[Detailed Description of the Invention]

[Technical Problem]

There has been a constant discussion that cellular wireless communication systems have limitations in efficiently guaranteeing the performance of various next-generation applications, and that information from each network layer should be cross-utilized to enhance user-perceived performance. The disclosure proposes a performance control structure for cellular networks (e.g., 5G-adv networks/6G networks) to guarantee performance of applications and proposes an efficient information exchange method therefor. Further, the disclosure proposes a performance guarantee system for applications using bearers and network slices in cellular networks.

There is a global consensus that to efficiently support next-generation high value-added applications, such as extended reality (XR), mobile holograms, and digital twins, innovative designs based on user experience are needed to move beyond the closed cellular standard architecture up to Release 17.

To efficiently guarantee application performance, the cellular wireless communication system should be able to meet the quality of service (QoS) requirements for performance guarantee according to the characteristics of the applications used in the UE. However, legacy cellular wireless communication systems, in which the layers managing resources within the radio network have developed independently from the higher layers, i.e., the application layer/transport layer, may not efficiently meet the characteristics of various applications and individual-QoS requirements. The bearer and network slicing technologies of legacy cellular wireless communication systems may keep the bitrate of the radio network high or the latency low, but they have limitations in guaranteeing application performance because they cannot simultaneously set the bitrate, latency, and channel reliability as precise as individual applications require. Therefore, a need exists for a cellular wireless communication system protocol that may reflect diverse QoS requirements and characteristics of next-generation applications and may guarantee or control them in a resource-efficient manner.

[Technical Solution]

The disclosure provides a method by a core network entity receiving information related to a network slice-based application in a communication system supporting an operation of the application, comprising receiving a transmission control protocol (TCP) protocol data unit (PDU) through a transport layer from an external device, parsing a TCP header in the TCP PDU to obtain application layer information related to the application from the TCP header, and transmitting control information related to the application to the external device based on the application layer information, wherein the application layer information includes an application data unit (ADU) identifier corresponding to the application and a required latency time corresponding to the application.

The disclosure provides a method for transmitting information related to a network slice-based application by a device supporting the application, comprising generating a TCP PDU by including application layer information related to the application in a TCP header; transmitting the generated TCP PDU to a core network entity through a transport layer; and receiving control information related to the application from the core network entity, wherein the application layer information includes an ADU identifier corresponding to the application and a required latency time corresponding to the application.

The disclosure provides a core network entity device receiving information related to a network slice-based application in a communication system supporting an operation of the application, comprising a transceiver receiving a TCP PDU through a transport layer from an external device and a controller parsing a TCP header in the TCP PDU to obtain application layer information related to the application from the TCP header and controlling the transceiver to transmit control information related to the application to the external device based on the application layer information, wherein the application layer information includes an ADU identifier corresponding to the application and a required latency time corresponding to the application.

The disclosure provides a device transmitting information related to a network slice-based application in a communication system supporting an operation of the application, comprising a controller generating a TCP PDU by including application layer information related to the application in a TCP header; and a transceiver transmitting the generated TCP PDU to a core network entity through a transport layer and receiving control information related to the application from the core network entity, wherein the application layer information includes an ADU identifier corresponding to the application and a required latency time corresponding to the application.

[Advantageous Effects]

The disclosure provides a structure and formula for a cellular wireless communication system to guarantee application performance.

The disclosure provides a method and device for supporting efficient performance guarantee through the transfer of application layer information/transport layer information and reflecting the characteristics and QoS requirements of various applications in a cellular wireless communication system.

According to an embodiment of the disclosure, there is provided a scheme for defining the latency elements of an application from an end-to-end (e2e) perspective.

According to an embodiment of the disclosure, there is provided a scheme for applying a latency element control formula using network variables.

According to an embodiment of the disclosure, there is provided a scheme for generalizing various QoS requirements of applications.

According to an embodiment of the disclosure, there is provided a scheme for efficiently transferring application layer information/transport layer information to a cellular system.

[Brief Description of the Drawings]

FIG. 1 is a view illustrating an application performance guarantee control structure of a cellular system according to an embodiment of the disclosure;

FIG. 2 is a view illustrating a method for transferring application/transport layer information to a cellular system according to an embodiment of the disclosure;

FIG. 3 is a view illustrating a method for a core network entity device to receive application layer information/transport layer information for guaranteeing application performance according to the disclosure;

FIG. 4 is a view illustrating a method for an application execution device to transmit application layer information/transport layer information for guaranteeing application performance according to the disclosure;

FIG. 5 is a view illustrating a structure of a core network entity device according to the disclosure; and

FIG. 6 is a view illustrating a structure of an application execution device according to the disclosure.

[Mode for Carrying out the Invention]

Hereinafter, embodiments of the present invention are described in detail with reference to the accompanying drawings. When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

Hereinafter, the disclosure relates to a method and device for efficiently utilizing and transferring application/transport layer information to efficiently enhance application performance in a cellular wireless communication system. Specifically, the disclosure describes a technology for supporting efficient performance guarantee through the transfer of application/transport layer information and reflecting the characteristics and QoS requirements of various applications in a cellular wireless communication system.

For ease of description, the terms and names defined in the 3rd generation partnership project long term evolution (3GPP LTE) and/or 5G standards may be used herein. However, the disclosure is not limited by such terms and names and may be likewise applicable to systems conforming to other standards.

Equations 1 to 3 exemplify a structure of an end-to-end (e2e) latency element $t_{e2e}$ for application performance guarantee according to the disclosure.

To guarantee the actual application performance of the UE, perceivable data (application data unit (ADU)) of the application being used by the UE should be able to be transferred within a time $t_{budget}$ desired by the UE rather than data in units of bits or packets.

Applications using the cellular system may be largely divided into three: uplink only applications, downlink only applications, and both uplink/downlink applications.

[Equation 1]

$$t_{e2e} = t_{pre-processing} + t_{up} + t_{post-processing} \leq t_{budget}$$

Equation 1 exemplifies what latency elements should be removed for the uplink only application to achieve required performance.

$t_{budget}$ is an example of the performance required by the application and may be defined as a time (i.e., latency budget) required until the application data unit (ADU) arrives at the recipient according to the frame per second (FPS). **In the uplink only application (posting on the user's social network service (SNS) application), it may be determined that the performance of the application is guaranteed when the sum, i.e., $t_{pre-processing} + t_{up} + t_{post-processing}$ of $t_{pre-processing}$, which is the time of processing the ADU by the user equipment (UE), $t_{up}$, which is the uplink latency tie of the radio network, and $t_{post-processing}$, which is the time of processing the ADU by the reception server, is $t_{budget}$ or less. Since, in the uplink only application, $t_{pre-processing}$ corresponds to processing before uplink transmission and is thus a latency element due to processing (e.g., encoding) in the UE, and $t_{post-processing}$ corresponds to processing (e.g., decoding or computing) after uplink transmission and may thus be a latency element due to processing in the reception server.

[Equation 2]

$$t_{e2e} = t_{pre-processing} + t_{down} + t_{post-processing} \leq t_{budget}$$

Equation 2 exemplifies what latency elements should be removed for the downlink only application to achieve required performance.

**In** the downlink only application (e.g., streaming download in the video application), it may be determined that to guarantee application performance, the sum of the $t_{pre-processing}$ latency of the server, the downlink latency $t_{down}$, and the $t_{post-processing}$ latency should be $t_{budget}$ or less. **In** the downlink only application, $t_{pre-processing}$ corresponds to processing before downlink transmission and is thus a latency element due to processing (e.g., encoding or computing) in the transmission server, and $t_{post-processing}$ corresponds to processing after downlink transmission and may thus be a latency element due to processing (e.g., decoding) in the UE.

[Equation 3]

$$t_{e2e} = t_{pre-processing} + t_{up} + t_{computing} + t_{down} + t_{post-processing} \leq t_{budget}$$

Equation 3 exemplifies what latency elements should be removed for the both uplink/downlink application to achieve required performance.

In the both uplink/downlink application (e.g., cloud gaming application, deep neural network (DNN) offloading), it should be determined that to guarantee application performance, $t_{pre-processing} + t_{up} + t_{computing} + t_{down} + t_{post-processing}$ including $t_{computing}$ which is the computing time of the server should be $t_{budget}$ or less. Assuming an application in which uplink is performed, followed by downlink, $t_{pre-processing}$ and $t_{post-processing}$ may be latency elements due to processing (e.g., encoding or decoding) in the UE, and $t_{computing}$ may be a latency element due to processing (e.g., computing or DNN inference) of the server. On the other hand, assuming an application in which downlink is performed, and uplink is then performed, $t_{pre-processing}$ and $t_{post-processing}$ may be latency elements due to processing in the server, and $t_{computing}$ may be a latency element due to processing in the UE.

Network variables corresponding to the latency elements in Equation 3 are described with reference to the application in which uplink is performed, and downlink is then performed.

In Equation 3, $t_{pre-processing}$ may mean the time when the UE encodes the ADU before transmission.

In Equation 3, $t_{up}$ means the uplink network latency time, and the uplink network latency may be defined as ADU size/uplink bit rate + uplink propagation latency + radio link control (RLC) queueing latency + scheduling grant latency. (Uplink network latency = ADU size / throughput + propagation + RLC queueing + grant)

In Equation 3, $t_{computing}$ may be defined as the ADU processing (e.g., DNN inference) time of the server + ADU encoding or decoding time. ($t_{computing}$ = Server processing time + encoding or decoding time) DNN inference time may be the time required for inference from the deep learning input time to the output time.

In Equation 3, $t_{down}$ means the downlink network latency time, and the downlink network latency may be defined as ADU size/downlink bit rate + downlink propagation latency + RLC queueing latency. (Downlink network latency = ADU size / throughput + propagation + RLC queueing)

In Equation 3, $t_{post-processing}$ may mean the ADU decoding time of the UE.

The network entities according to the disclosure enable application performance guarantee by meeting the QoS requirement of the application, i.e., the latency time being $t_{budget}$ or less, using information about the defined network variables.

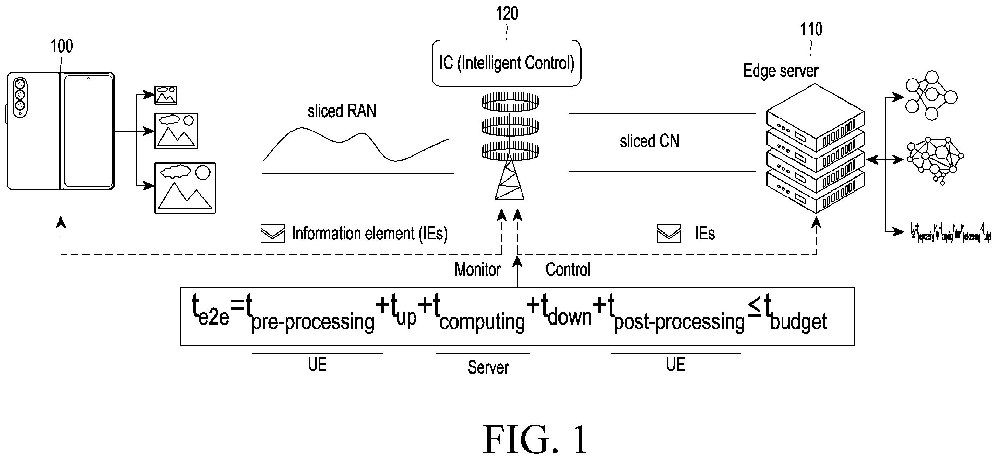

FIG. 1 illustrates an application performance guarantee control procedure of a cellular communication system according to the disclosure.

When the UE 100 executes an application using a network slice (e.g., sliced RAN, sliced CN, etc.), it may communicate with the server 110 (e.g., edge server). The edge server may be positioned in the sliced CN. Examples of the application may include uplink only applications, downlink only applications, and both uplink/downlink applications, and FIG. 1 illustrates a both uplink/downlink application. An intelligent controller (IC) 120 positioned in a core network (e.g., sliced CN) may receive application layer information or transport layer information from the UE 100 or the server 110 to monitor the network variables of the UE 100 or the server 110. The IC 120 may determine an expected latency $t_{e2e}$ of the application from the network variable, and may send information for controlling the network variable (i.e., latency element) of the UE 100 or the server 110 so that the expected latency of the application is the latency budget $t_{budget}$ of the application or less.

In order for the UE 100 or the server 110 to complete ADU transmission/reception within $t_{budget}$ by controlling network variables and latency elements, the disclosure proposes an intelligent control unit, i.e., an intelligent controller (IC) 120, for performance guarantee, which may detect and control whether the sum of the latency elements is not out of the latency budget $t_{budget}$.

The disclosure proposes to perform the role as the IC by utilizing the core network of the cellular system. For example, the IC may be implemented in core network entities, e.g., the user plane function of the 5G core network (5GC). The UPF of the core network facilitates expanding the functions to process application/transport layer and obtaining RAN information according to the RAN information acquisition interface defined in 3GPP system architecture 5 (SA5) operations, administration and maintenance (OAM) and is thus appropriate for serving as an IC that should control e2e performance. The IC of the core network may monitor the latency budget equation of each application and control the latency element (or the corresponding network variable) so that the sum of the latency elements does not exceed $t_{budget}$.

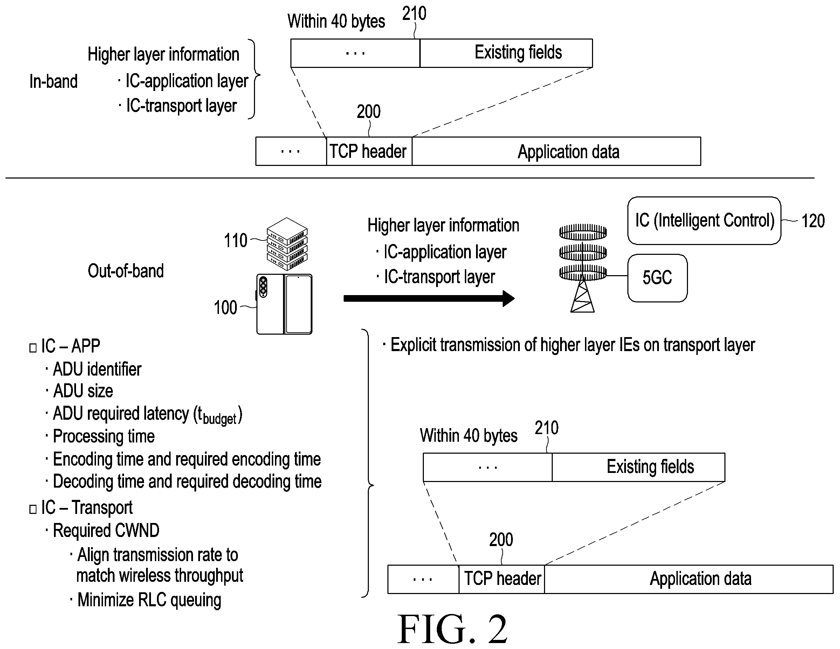

FIG. 2 illustrates a method for transferring application layer information/transport layer information for monitoring a latency budget according to the disclosure.

The IC 120 of the core network may receive application layer information or transport layer information to monitor and control the performance of the application according to the latency budget equation. The information may be transferred in the form of an information element (IE).

The application layer information may include at least one of the ADU identifier, ADU size, ADU request latency (i.e., latency budget $t_{budget}$), processing time, encoding time, or decoding time, which is the ADU processing time according to the performance of each device (e.g., the UE 100 or the server 110). For example, if the device is the server 110, the application layer information may include processing time. For example, if the device is the UE 100, the application layer information may include encoding time or decoding time. The processing time, encoding time, or decoding time which is the application layer information may be used to determine $t_{pre-processing}$, $t_{computing}$, and $t_{post-processing}$ of Equations 1 to 3.

The transport layer information may include a required cwnd (required cwnd), which is a required congestion window (cwnd) amount capable of digesting the data transmission amount of the application. The IC of the core network may use the cwnd to align the transmission rate of each device to match wireless throughput. Further, the IC of the core network may minimize RLC queuing by considering the cwnd.

For reference, since the latency elements $t_{up}$ and $t_{down}$ in Equations 1 to 3 reflect propagation latency, RLC queueing latency, or scheduling grant latency time, it may be determined to consider lower layer information (RLC, MAC, and PHY layers) together rather than application layer information or transport layer information.

In order to minimize the load caused by the information transmission, the ADU identifier and ADU size, which are characteristic-related information about the application, and QoS requirement-related information ADU required latency $t_{budget}$ may be generalized as an integer form. Generalizing as an integer form means that the information may be expressed as an integer value (e.g., $t_{budget}$ is expressed as an integer value in milliseconds). The sum of the ADU identifier, ADU size, $t_{budget}$, processing time, encoding time, decoding time, and required cwnd of the application layer information and transport layer information may be generated not to exceed several tens of bytes (e.g., 40 bytes or less).

An in-band scheme or an out-of-band scheme may be used as a transmission scheme for transferring at least one of the pieces of application layer information and transport layer information to the cellular communication system. The in-band scheme is a scheme of transmitting the information using the legacy user region channel. The out-of-band scheme is a scheme that creates a separate channel for transferring application layer information/transport layer information and explicitly transfers the information to the core network through the separate channel.

To avoid transport layer security (TLS) encryption, each device (e.g., UE or edge server) may include necessary information among the application layer and transport layer information in a field 210 free to use in the header 200 of the transmission control protocol (TCP) protocol data unit (PDU) and transfer the same to the core network. In transmission through the application layer, TLS encryption for data is performed, so that the IC of the core network should perform TLS decryption to parse the information. The TLS decryption may act as a burden on the IC of the core network. Therefore, the information may be transmitted through the TCP header 200 (internal free field 210) of the transport layer rather than being transmitted through the application layer. In other words, the higher layer IEs (information of the application layer and the transport layer) may be explicitly transmitted through the transport layer. The information of the application layer and the transport layer may be transmitted through the Internet protocol (IP) layer, but in this case, the restriction that the protocol of the IP layer should be modified may act on intermediate network devices.

The IC 120 of the core network may parse the information in the TCP header 200 to perform QoS control (i.e., latency budget control) to guarantee the performance of the application. Through the transferred information and the equations of the disclosure, the IC of the core network may identify the expected latency $t_{e2e}$ of the application and control the expected latency to be within the latency budget $t_{budget}$. For example, the IC of the core network may achieve application performance guarantee by delivering feedback back to each layer (lower layers of the transport layer, such as packet data convergence protocol (PDCP), radio link control (RLC), medium access control (MAC), or PHY layer). The feedback may be information indicating adjustment of network variables (e.g., ADU size, encoding time, and decoding time) so that the expected latency $t_{e2e}$ is less than or equal to the latency budget $t_{budget}$.

Since the transfer of application layer information/transport layer information to the core network acts as a load on the transmission entity and the network, the IC of the core network may minimize the transmission frequency of the information by setting the transmission period delicately. To that end, the concept of 'information fluidity' of the application layer may be used. The information fluidity of the application layer may mean the degree to which the UE's application layer information (e.g., ADU size, encoding time, decoding time) changes. For real-time streaming applications, e.g., the information fluidity of the application is low. This is why in the case of real-time streaming applications, if the resolution, FPS, and asynchronous latency should be guaranteed to the level desired by the user, the resolution, FPS, and asynchronous latency values set by the user for the first time through the user interface (UI) maintain the higher layer (i.e., application layer, transport layer) information value continuously in the future. However, there may also be situations in which the higher layer information (upper layer info) of applications where performance guarantee is desired is flexibly changed (e.g., when several applications are alternately used, when the user-causing transmission is continuously changed, or dynamic adaptive streaming over HTTP (DASH) system, etc.). The IC of the core network according to the disclosure may determine (predict) information fluidity through the degree of change in previous higher layer information and assign a different transmission period according to the determined information fluidity. For example, according to the level of information fluidity, a transmission period of 1 second or more may be set when information fluidity is lowest (e.g., when the frame encoding rate is fixed for FPS), and a transmission period of less than 1 second may be set when information fluidity is high (e.g., when the frame encoding rate is not fixed).

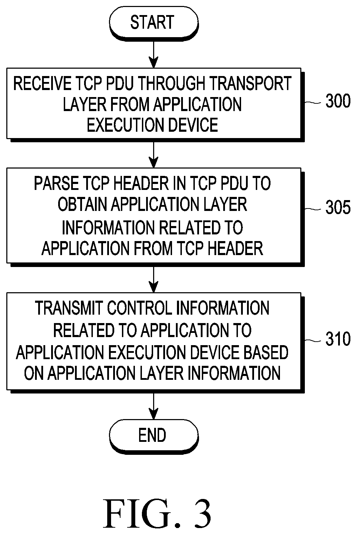

FIG. 3 is a view illustrating a method for a core network entity device to receive application layer information/transport layer information for guaranteeing application performance according to the disclosure.

The core network entity may be, e.g., a UPF of 5GC. The core network entity may receive a TCP PDU from an external device (e.g., an application execution device, a UE, a server) through the transport layer (300).

The core network entity may parse the TCP header in the TCP PDU to obtain application layer information related to the application from the TCP header (305). The application layer information may include an ADU identifier corresponding to the application and a required latency time corresponding to the application. The application layer information may further include at least one of the ADU size corresponding to the application, the encoding time of the external device, the decoding time of the external device, or the processing time of the external device.

The TCP header may further include transport layer information related to the application. The transport layer information may include a congestion window (cwnd) value of the external device.

The core network entity may transmit control information related to the application to the external device based on the application layer information (310). In this case, the core network entity may further perform an operation of identifying whether the expected latency time $t_{e2e}$ of the application is less than or equal to the required latency time $t_{budget}$ based on the application layer information and the transport layer information. The operation of identifying whether the expected latency time $t_{e2e}$ is less than or equal to the required latency time $t_{budget}$ may be performed using Equations 1 to 3.

The core network entity may further perform the operation of determining the transmission period of the application layer information based on information fluidity of the application layer information, and setting (transmitting setting information) the determined transmission period to the external device. The information fluidity may be determined as 'high' or 'low' based on the degree of change in the application layer information. When the information fluidity is low, the transmission period may be set to a value of 1 second or more, and when the information fluidity is high, the transmission period may be set to a value of less than 1 second.

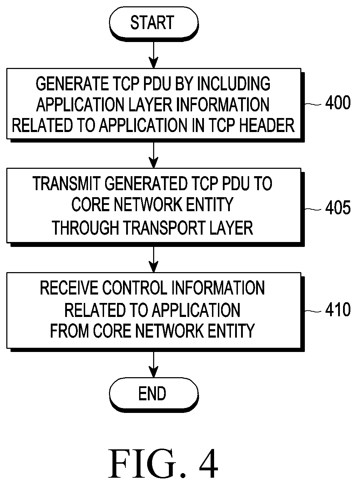

FIG. 4 is a view illustrating a method for an application execution device to transmit application layer information/transport layer information for guaranteeing application performance according to the disclosure.

The application execution device may be a UE or an edge server. The application execution device may generate a TCP PDU by including application layer information related to the application in the TCP header (400). The application layer information may include an ADU identifier corresponding to the application and a required latency time corresponding to the application. The application layer information may further include at least one of the ADU size corresponding to the application, the encoding time of the application execution device, the decoding time of the application execution device, or the processing time of the application execution device.

The TCP header may further include transport layer information related to the application. The transport layer information may include a congestion window (cwnd) value of the application execution device.

The application execution device may transmit the generated TCP PDU to the core network entity through the transport layer (405).

The application execution device may receive control information related to the application from the core network entity (410).

The application execution device may further perform an operation of controlling the network variable related to the application based on the control information.

The application execution device may further perform an operation of receiving setting information about the transmission period of the application layer information from the core network entity and controlling the transmission period of the TCP PDU including the application layer information based on the setting information. The transmission period may be determined based on the information fluidity of the application layer information. The information fluidity may be determined as 'high' or 'low' based on the degree of change in the application layer information. When the information fluidity is low, the transmission period may be set to a value of 1 second or more, and when the information fluidity is high, the transmission period may be set to a value of less than 1 second.

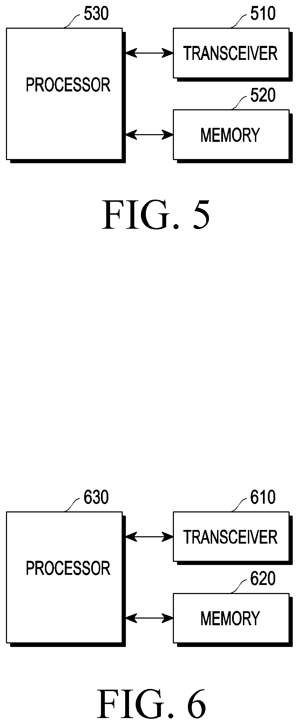

FIG. 5 is a view illustrating a structure of a core network entity device according to the disclosure.

As shown in FIG. 5, a core network entity device of the disclosure may include a transceiver 510 and a processor 530. Memory 520 may be further included. The processor 530 and the transceiver 510 may operate according to the method of the core network entity described in the disclosure. However, the components of the core network entity are not limited to the above-described examples. For example, the core network entity may include more or fewer components than the above-described components. The processor 530, the transceiver 510, and the memory 520 may be implemented in the form of a single chip. In addition to the UPF described above, the core network entity may be a network function (NF), such as the access and mobility management function (AMF), session management function (SMF), policy control function (PCF), network exposure function (NEF), or user data management (UDM). Further, the core network entity may be a base station.

The transceiver 510 collectively refers to the receiver of the core network entity and the transmitter of the core network entity and may transmit and receive signals to/from a UE, a server, or another network entity. In this case, the signals transmitted/received with the base station may include control information and data. To that end, the transceiver 510 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 510, and the components of the transceiver 510 are not limited to the RF transmitter and the RF receiver. The transceiver 510 may include a wired/wireless transceiver and may include various components for transmitting/receiving signals.

Further, the transceiver 510 may receive signals via a communication channel (e.g., a radio channel), output the signals to the processor 530, and transmit signals output from the processor 530 via a radio channel.

Further, the transceiver 510 may receive the communication signal and output it to the processor 530 and transmit the signal output from the processor 530 to the UE or another network entity through a wired/wireless network.

The memory 520 may store programs and data necessary for the operation of the core network entity. Further, the memory 520 may store control information or data that is included in the signal obtained by the core network entity. The memory 520 may include a storage medium, such as ROM, RAM, hard disk, CD-ROM, and DVD, or a combination of storage media.

The processor 530 may control a series of processes for the core network entity to be able to operate according to the above-described embodiments. The processor 530 may include at least one processor. The methods according to the embodiments descried in the specification or claims of the disclosure may be implemented in hardware, software, or a combination of hardware and software.

FIG. 6 is a view illustrating a structure of an application execution device according to the disclosure.

An application execution device according to the disclosure may be a UE or an edge server. As shown in FIG. 6, the application execution device of the disclosure may include a transceiver 610 and a processor 630. The application execution device may further include memory 620. The processor 630 and the transceiver 610 may operate according to the method of the UE described in the disclosure. However, the components of the application execution device are not limited thereto. For example, the UE may include more or fewer components than the above-described components. The processor 630, the transceiver 610, and the memory 620 may be implemented in the form of a single chip.

The transceiver 610 collectively refers to the receiver of the application execution device and the transmitter of the application execution device, and may transmit and receive signals to/from a core network entity or server. The signals transmitted/received with the core network entity may include control information and data. To that end, the transceiver 610 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 610, and the components of the transceiver 610 are not limited to the RF transmitter and the RF receiver.

Further, the transceiver 610 may include a wired/wireless transceiver and may include various components for transmitting/receiving signals.

The transceiver 610 may receive signals via a radio channel, output the signals to the processor 630, and transmit signals output from the processor 630 via a radio channel.

Further, the transceiver 610 may receive the communication signal and output it to the processor 630 and transmit the signal output from the processor 630 to the core network entity through a wired/wireless network.

The memory 620 may store programs and data necessary for the operation of the application execution device. Further, the memory 620 may store control information or data that is included in the signal obtained by the application execution device. The memory 620 may include a storage medium, such as ROM, RAM, hard disk, CD-ROM, and DVD, or a combination of storage media.

The processor 630 may control a series of processes for the application execution device to be able to operate according to the above-described embodiments. The processor 630 may include at least one processor. For example, the processor 630 may include a communication processor (CP) that performs control for communication and an application processor (AP) that controls an upper layer, such as an application program.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

The embodiments herein are provided merely for better understanding of the present invention, and the present invention should not be limited thereto or thereby. It should be appreciated by one of ordinary skill in the art that various changes in form or detail may be made to the embodiments without departing from the scope of the present disclosure defined by the following claims.

**Claims**

1. A method by a core network entity receiving information related to a network slice-based application in a communication system supporting an operation of the application, the method comprising:

   receiving a transmission control protocol (TCP) protocol data unit (PDU) through a transport layer from an external device;
   parsing a TCP header in the TCP PDU to obtain application layer information related to the application from the TCP header; and
   transmitting control information related to the application to the external device based on the application layer information,
wherein the application layer information includes an application data unit (ADU) identifier corresponding to the application and a required latency time corresponding to the application.

2. The method of claim 1, wherein the application layer information further includes at least one of an ADU size corresponding to the application, an encoding time of the external device, a decoding time of the external device, or a processing time of the external device.

3. The method of claim 2, further comprising obtaining transport layer information related to the application from the TCP header,
wherein the transport layer information includes a congestion window (cwnd) value of the external device.

4. The method of claim 3, further comprising identifying whether an expected latency time ($t_{2e2}$) of the application is the required latency time ($t_{budget}$) or less based on the application layer information and the transport layer information.

5. The method of claim 4, wherein the identifying is performed using any one of following equations:

$$t_{e2e} = t_{pre-processing} + t_{up} + t_{post-processing} \leq t_{budget}$$

$$t_{e2e} = t_{pre-processing} + t_{down} + t_{post-processing} \leq t_{budget}$$

$$t_{e2e} = t_{pre-processing} + t_{up} + t_{computing} + t_{down} + t_{post-processing} \leq t_{budget}$$

wherein $t_{pre-processing}$ is an encoding time of an ADU in a UE, $t_{up}$ is an uplink network latency time, $t_{computing}$ is a processing time of the ADU in a server, $t_{down}$ is a downlink network latency time, and $t_{post-processing}$ is a decoding time of the ADU in the UE.

6. The method of claim 1, further comprising:

determining a transmission period of the application layer information based on an information fluidity of the application layer information; and
setting the determined transmission period to the external device,
wherein the information fluidity is determined based on a degree of change in the application layer information.

7. A method for transmitting information related to a network slice-based application by a device supporting the application, the method comprising:

generating a transmission control protocol (TCP) protocol data unit (PDU) by including application layer information related to the application in a TCP header;
transmitting the generated TCP PDU to a core network entity through a transport layer; and
receiving control information related to the application from the core network entity,
wherein the application layer information includes an application data unit (ADU) identifier corresponding to the application and a required latency time corresponding to the application.

8. The method of claim 7, wherein the application layer information further includes at least one of an ADU size corresponding to the application, an encoding time of the device, a decoding time of the device, or a processing time of the device.

9. The method of claim 8, further comprising including transport layer information related to the application in the TCP header,
wherein the transport layer information includes a congestion window (cwnd) value of the device.

10. The method of claim 9, further comprising controlling a network variable related to the application based on the control information.

11. The method of claim 7, further comprising:

receiving setting information about a transmission period of the application layer information from the core network entity; and
controlling a transmission period of the TCP PDU including the application layer information based on the setting information,
wherein the transmission period is determined based on an information fluidity of the application layer information, and the information fluidity is based on a degree of change in the application layer information.

12. A core network entity device receiving information related to a network slice-based application in a communication system supporting an operation of the application, comprising:

a transceiver receiving a transmission control protocol (TCP) protocol data unit (PDU) through a transport layer from an external device; and
a controller parsing a TCP header in the TCP PDU to obtain application layer information related to the application from the TCP header and controlling the transceiver to transmit control information related to the application to the external device based on the application layer information,
wherein the application layer information includes an application data unit (ADU) identifier corresponding to the application and a required latency time corresponding to the application.

13. The core network entity device of claim 12, wherein the device is a user plane function (UPF) of a 5G core network (5GC).

14. A device transmitting information related to a network slice-based application in a communication system supporting an operation of the application, comprising:

a controller generating a transmission control protocol (TCP) protocol data unit (PDU) by including application layer information related to the application in a TCP header; and
a transceiver transmitting the generated TCP PDU to a core network entity through a transport layer and receiving control information related to the application from the core network entity,
wherein the application layer information includes an application data unit (ADU) identifier corresponding to the application and a required latency time corresponding to the application.

15. The device of claim 14, wherein the device is a user equipment (UE) or an edge server.

120

110

IC (Intelligent Control)

Edge server

sliced RAN

sliced CN

Information element (IEs)

IEs

Monitor    Control

$$t_{e2e}=t_{pre\text{-}processing}+t_{up}+t_{computing}+t_{down}+t_{post\text{-}processing}\leq t_{budget}$$

UE          Server              UE

FIG. 1

Within 40 bytes  210

Higher layer information
In-band
· IC-application layer
· IC-transport layer

| ... | Existing fields |

200

| ... | TCP header | Application data |

---

Out-of-band

110

Higher layer information
· IC-application layer
· IC-transport layer

IC (Intelligent Control) — 120

5GC

100

□ IC – APP
· ADU identifier
· ADU size
· ADU required latency ($t_{budget}$)
· Processing time
· Encoding time and required encoding time
· Decoding time and required decoding time

□ IC – Transport
· Required CWND
· Align transmission rate to match wireless throughput
· Minimize RLC queuing

· Explicit transmission of higher layer IEs on transport layer

Within 40 bytes  210

| ... | Existing fields |

200

| ... | TCP header | Application data |

## FIG. 2

EP 4 580 167 A1

START

RECEIVE TCP PDU THROUGH TRANSPORT
LAYER FROM APPLICATION
EXECUTION DEVICE — 300

PARSE TCP HEADER IN TCP PDU TO
OBTAIN APPLICATION LAYER
INFORMATION RELATED TO
APPLICATION FROM TCP HEADER — 305

TRANSMIT CONTROL INFORMATION
RELATED TO APPLICATION TO
APPLICATION EXECUTION DEVICE BASED
ON APPLICATION LAYER INFORMATION — 310

END

# FIG. 3

```
        ┌─────────┐
        │  START  │
        └─────────┘
             │
             ▼
┌───────────────────────────────┐
│   GENERATE TCP PDU BY INCLUDING│
│   APPLICATION LAYER INFORMATION│ ─── 400
│ RELATED TO APPLICATION IN TCP HEADER│
└───────────────────────────────┘
             │
             ▼
┌───────────────────────────────┐
│   TRANSMIT GENERATED TCP PDU TO│
│      CORE NETWORK ENTITY       │ ─── 405
│    THROUGH TRANSPORT LAYER     │
└───────────────────────────────┘
             │
             ▼
┌───────────────────────────────┐
│   RECEIVE CONTROL INFORMATION  │
│      RELATED TO APPLICATION    │ ─── 410
│   FROM CORE NETWORK ENTITY     │
└───────────────────────────────┘
             │
             ▼
        ┌─────────┐
        │   END   │
        └─────────┘
```

# FIG. 4

FIG. 5

FIG. 6

## INTERNATIONAL SEARCH REPORT

| International application No. |
| --- |
| **PCT/KR2023/012258** |

### A. CLASSIFICATION OF SUBJECT MATTER

**H04L 69/329**(2022.01)i; **H04L 69/326**(2022.01)i; **H04L 69/22**(2022.01)i

According to International Patent Classification (IPC) or to both national classification and IPC

### B. FIELDS SEARCHED

Minimum documentation searched (classification system followed by classification symbols)

H04L 69/329(2022.01); G06F 13/14(2006.01); G06F 13/42(2006.01); H04L 12/26(2006.01); H04L 12/801(2013.01); H04L 29/06(2006.01); H04W 28/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 계층(transport layer), 응용 계층(application layer), TCP(Transmission Control Protocol) PDU(protocol data unit), TCP 헤더(header), ADU(application data unit), 지연 시간(delay time)

### C. DOCUMENTS CONSIDERED TO BE RELEVANT

| Category* | Citation of document, with indication, where appropriate, of the relevant passages | Relevant to claim No. |
| --- | --- | --- |
| A | US 2020-0404538 A1 (QUALCOMM INCORPORATED) 24 December 2020 (2020-12-24)<br>See paragraphs [0096]-[0120]; claims 1-30; and figures 4-6. | 1-15 |
| A | KR 10-2010-0071792 A (ELECTRONICS AND TELECOMMUNICATIONS RESEARCH INSTITUTE) 29 June 2010 (2010-06-29)<br>See paragraphs [0010]-[0012]. | 1-15 |
| A | JP 2010-157875 A (FUJITSU LTD.) 15 July 2010 (2010-07-15)<br>See paragraphs [0012]-[0059]; and claims 1-3. | 1-15 |
| A | KR 10-2012-0002424 A (ELECTRONICS AND TELECOMMUNICATIONS RESEARCH INSTITUTE) 05 January 2012 (2012-01-05)<br>See paragraphs [0030]-[0066]; and figures 2-8. | 1-15 |
| A | KR 10-2014-0048815 A (ROBERT BOSCH GMBH) 24 April 2014 (2014-04-24)<br>See paragraphs [0005]-[0059]. | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 November 2023** | **20 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2023/012258** |

| Patent document cited in search report | | | Publication date (day/month/year) | Patent family member(s) | | | Publication date (day/month/year) |
|---|---|---|---|---|---|---|---|
| US | 2020-0404538 | A1 | 24 December 2020 | US | 11792686 | B2 | 17 October 2023 |
|  |  |  |  | WO | 2020-257107 | A1 | 24 December 2020 |
| KR | 10-2010-0071792 | A | 29 June 2010 | US | 2010-0158009 | A1 | 24 June 2010 |
| JP | 2010-157875 | A | 15 July 2010 | JP | 5067362 | B2 | 07 November 2012 |
| KR | 10-2012-0002424 | A | 05 January 2012 | US | 2013-0103852 | A1 | 25 April 2013 |
|  |  |  |  | US | 9367514 | B2 | 14 June 2016 |
|  |  |  |  | WO | 2012-002726 | A2 | 05 January 2012 |
| KR | 10-2014-0048815 | A | 24 April 2014 | CN | 103731409 | A | 16 April 2014 |
|  |  |  |  | CN | 103731409 | B | 15 October 2019 |
|  |  |  |  | EP | 2723031 | A1 | 23 April 2014 |
|  |  |  |  | EP | 2723031 | B1 | 24 July 2019 |
|  |  |  |  | FR | 2996976 | A1 | 18 April 2014 |
|  |  |  |  | FR | 2996976 | B1 | 24 February 2017 |
|  |  |  |  | IT | MI20131676 | A1 | 17 April 2014 |
|  |  |  |  | RU | 2013145968 | A | 20 April 2015 |
|  |  |  |  | US | 10440157 | B2 | 08 October 2019 |
|  |  |  |  | US | 2014-0108603 | A1 | 17 April 2014 |

Form PCT/ISA/210 (patent family annex) (July 2022)